# EUROPÄISCHE PATENTSCHRIFT

(11) **EP 3 482 467 B1**
(45) Veröffentlichungstag und Bekanntmachung des Hinweises auf die Patenterteilung: **06.10.2021**
(21) Anmeldenummer: 17746382.5
(22) Anmeldetag: 07.07.2017
(51) Int. Cl.: G06F 8/65, H01R 13/66, G06F 9/455

(54) **STECKVERBINDERBAUTEIL, STECKVERBINDER, STECKVERBINDERSYSTEM UND VERFAHREN ZUM ZUSAMMENSETZEN UND BETREIBEN EINES STECKVERBINDERS**
PLUG CONNECTOR COMPONENT, PLUG CONNECTOR, PLUG CONNECTOR SYSTEM AND METHOD FOR ASSEMBLING AND OPERATING A PLUG CONNECTOR
COMPOSANT DE CONNECTEUR ÉLECTRIQUE, CONNECTEUR ÉLECTRIQUE, SYSTÈME DE CONNECTEUR ÉLECTRIQUE ET PROCÉDÉ D'ASSEMBLAGE ET DE EXPLOITATION D'UN CONNECTEUR ÉLECTRIQUE

(30) Priorität: 07.07.2016 DE 102016112519
(43) Veröffentlichungstag der Anmeldung: 15.05.2019
(73) Patentinhaber: Harting Electric GmbH & Co. KG, 32339 Espelkamp (DE)
(72) Erfinder: TRÖGER, Lutz, 49082 Osnabrück (DE); GERICKE, Christoph, 37461 Bad Lauterberg (DE); FRIESEN, Markus, 32339 Espelkamp (DE); WALTHER, Karsten, 15711 Königs Wusterhausen (DE)
(86) Internationale Anmeldenummer: PCT/DE2017/100567
(87) Internationale Veröffentlichungsnummer: WO 2018/006908

(56) Entgegenhaltungen:
- WO-A1-2013/064189
- WO-A2-2015/149757
- DE-A1-102013 107 964
- Lars Hohmuth: "Virtualisierung für Produktion und IoT", Embedded Design, 19. Januar 2016 (2016-01-19), Seiten 17-19, XP055415413, Gefunden im Internet: URL:https://www.iot-design.de/download/emb edded-design-1-2016/ [gefunden am 2017-10-13]
- MORABITO ROBERTO ET AL: "Enabling Data Processing at the Network Edge through Lightweight Virtualization Technologies", 2016 IEEE INTERNATIONAL CONFERENCE ON SENSING, COMMUNICATION AND NETWORKING (SECON WORKSHOPS), IEEE, 27. Juni 2016 (2016-06-27), Seiten 1-6, XP033006663, DOI: 10.1109/SECONW.2016.7746807 [gefunden am 2016-11-16]

## Beschreibung

Die vorliegende Erfindung betrifft ein Steckverbindersystem mit wenigstens einem Steckverbinder und wenigstens einem mit diesem verbindbaren Gegensteckverbinder nach dem Oberbegriff des Hauptanspruchs 1. Außerdem betrifft die Erfindung ein Verfahren zum Zusammensetzen eines Steckverbinders und zum Betreiben des Steckverbinders zusammen mit einem Gegensteckverbinder gemäß dem Oberbegriff des unabhängigen Verfahrensanspruchs 8.

Es sind modulare Steckverbinder mit einem Gehäuse bekannt, die durch in das Gehäuse einsetzbare Funktionsmodule verschiedener Typen, welche mit jeweils unterschiedlichen Sensoren und Aktoren ausgestattet und dadurch für verschiedenste Funktionen eingerichtet sein können, beliebig konfigurierbar und erweiterbar sind. Innerhalb des Gehäuses können dabei mehrere derartiger Funktionsmodule zur selben Zeit angeordnet sein. Zur Steuerung der Funktionsmodule ist für gewöhnlich ein Steuermodul vorgesehen, das ebenfalls innerhalb des Gehäuses angeordnet ist. Steuermodul und Funktionsmodule können dabei an einem ebenfalls innerhalb des Gehäuses befindlichen Halterahmen angeordnet und fixiert sein.

Obwohl durch die modulare Bauweise derartiger Steckverbinder, die eine beliebige Austauschbarkeit der Funktionsmodule gewährleistet, eine gewisse Flexibilität der Steckverbinder erreicht werden kann, ist diese Flexibilität hinsichtlich neuer in das Gehäuse einzusetzender Funktionsmodule dennoch unzureichend. Es sind zwar verschiedene Konfigurationen des Steckverbinders mit verschiedenen Funktionsmodulen möglich. Da jedoch Funktionsmodule mit unterschiedlichen Sensoren und Aktoren unterschiedliche Anforderungen an die Software zu deren Steuerung sowie an die Rechenleistung des Steuermoduls stellen und zudem Aspekte der Verwendbarkeit und Sicherheit zu berücksichtigen sind, und da ferner bei der Herstellung des Steckverbinders nicht alle möglichen Funktionsmodultypen berücksichtigt werden können, sind die für den Steckverbinder verwendbaren Funktionsmodule auf die bei der Herstellung des Steckverbinders ursprünglich berücksichtigten und vorgegebenen Typen eingeschränkt. Dadurch ergibt sich zwangsläufig eine Beschränkung der mit verschiedenen Funktionsmodulen realisierbaren Konfigurationen des Steckverbinders auf Kombinationen von Funktionsmodulen, die den anfänglich berücksichtigten und vorgegebenen Typen angehören. Insbesondere das im Betrieb des Steckverbinders zur Steuerung der Funktionsmodule vorgesehene Steuermodul weist häufig eine monolithische Software auf und ist dadurch spezifisch auf die anfänglich berücksichtigten Funktionsmodultypen zugeschnitten. Eine Erweiterung der vom Steckverbinder verwendbaren Funktionsmodule auf Funktionsmodule, die anderen Typen als den ursprünglich berücksichtigten Typen angehören, erweist sich deshalb in der Praxis häufig als unmöglich oder als sehr schwierig und umständlich.

Die Druckschrift DE 10 2013 107 964 A1 offenbart eine Messanordnung mit einem Sensor, insbesondere zur Flüssigkeits- und/oder Gasanalyse, sowie entsprechenden Schnittstellen, einer Auswertschaltung mit einem Computerprogramm und zwei übergeordneten Datenverarbeitungseinrichtungen. Das System ist in der Lage, das Computerprogramm der Auswertschaltung zu aktualisieren. Insbesondere können dazu Computerprogrammmodule oder Parameter im Sensor abgelegt sein und nach Anschließen des Sensors an die entsprechende Schnittstelle an die Auswertschaltung übertragen werden.

Im Artikel "Visualisierung für Produktion und loT" (Autor: Lars Hohmuth, Zeitschrift "Embedded Design", Ausganbe 1, Januar 2016; https://www.iotdesign.de/download/embedded-design-1-2016) wird der vorteilhafte Einsatz von Softwarecontainern als Alternative zur virtuellen Maschinen in einem flexiblen Industrierechner mit Cloudanbindung für den Themenkomplex Industrie 4.0 erläutert. Die Softwarecontainer kommunizieren "IP"(Internetprotokoll)-basiert.

Die Druckschrift WO 2018/006908 A1 offenbart ein Steckverbindermodularsystem mit einem integrierten Bussytem, insbesondere einem I²C-Bussystem für ein Mastermodul, das eine Kommunikationsschnittstelle aufweisen kann, und mehrere Slavemodule, welche beispielsweise Sensoren aufweisen und für messtechnische Aufgaben vorgesehen sind. Insbesondere wird in dieser Druckschrift ein Verfahren zur Adressierung der Slavemodule vorgeschlagen. Ein ähnliches Steckverbindermodularsystem wird auch in der Druckschrift WO 2015/149757 A2 offenbart.

In der Praxis hat sich im Steckverbinderbereich der häufige Wechsel von Funktions-/Slavemodulen und insbesondere die parallele Steuerung mehrerer Funktions-/Slavemodule durch eine Steuereienheit als problematisch für die Software der Steuereinheit erwiesen. Fehlfunktionen, Ausfälle und Überschreitungen der Rechenkapazität sind oft die Folge.

Es ist daher die Aufgabe der vorliegenden Erfindung, ein Steckverbindersystem und ein Verfahren zum Zusammensetzen und Betreiben eines Steckverbinders zu schaffen, die eine besonders große Flexibilität hinsichtlich der parallelen Verwendbarkeit mehrerer verschiedener, insbesondere auch neuer, Funktionsmodultypen bieten.

Diese Aufgabe wird durch die Merkmale der unabhängigen Ansprüche gelöst. Bevorzugte Ausführungsformen sind Gegenstand der abhängigen Ansprüche.

Gemäß der vorliegenden Erfindung ist das Steuermodul des Steckverbinderbauteils dazu eingerichtet, wenigstens einen Container mit wenigstens einem zur Nutzung eines Betriebssystemkerns des Betriebssystems eingerichteten Prozess zu empfangen und zu implementieren und mittels des Prozesses das Funktionsmodul zumindest teilweise zu steuern. Entsprechend wird beim erfindungsgemäßen Verfahren wenigstens ein Container mit wenigstens einem Prozess, der zur Nutzung eines Betriebssystemkerns des Betriebssystems eingerichtet ist, an das Steuermodul übertragen und implementiert und der Prozess wird zumindest zum teilweisen Steuern des Funktionsmoduls ausgeführt. Infolge dieser Kapselung oder Virtualisierung der zur Steuerung eines Funktionsmoduls notwendigen Software ist es nicht mehr notwendig, das Steckverbinderbauteil vorab zum Steuern von spezifischen Funktionsmodulen einzurichten, die bestimmten vorgegebenen Typen angehören. Stattdessen sind mit demselben Steuermodul Funktionsmodule beliebiger verschiedener Typen steuerbar, ohne dass das Steuermodul vorab zur Steuerung von Funktionsmodulen dieser Typen eingerichtet worden wäre, da jedes Funktionsmodul vom Steuermodul unabhängig durch einen Container repräsentiert wird, der die zur Steuerung dieses Funktionsmoduls notwendigen Prozesse oder Prozeduren aufweist und der mit Einsetzen des Funktionsmoduls in das Gehäuse des Steckverbinderbauteils an das Steuermodul übertragen und von bzw. auf diesem implementiert wird. Auf diese Weise ergibt sich für das Steckverbinderbauteil und den Steckverbinder, insbesondere den modularen Steckverbinder, eine größtmögliche Flexibilität hinsichtlich neuer Funktionsmodultypen, ohne dass bei erstmaligen Einsatz eines Funktionsmoduls eines neuen Typs grundlegende Softwareupdates oder Erweiterungen des Betriebssystems des Steuermoduls erforderlich wären. Mithin ist daher unerheblich welche Aktoren oder Sensoren das Funktionsmodul konkret aufweist bzw. ob das Funktionsmodul einen Luftdrucksensor, einen Stromsensor, eine Schnittstelle für einen Lichtwellenleiter oder eine Photodiode aufweist oder ob es sich bei dem Funktionsmodul um einen Modulareinsatz ohne irgendeinen Sensor oder um einen Netzwerkknoten handelt. Selbst Funktionsmodule mit komplex zu steuernden Funktionen können grundsätzlich unabhängig von dem Steuermodul entworfen werden. Vorzugsweise wird jedes in das Gehäuse eingesetzte oder einsetzbare Funktionsmodul durch einen jeweiligen Container repräsentiert.

Ganz allgemein kann es sich bei dem Container einfach um ein Dateiensystem handeln, das einen Prozess oder mehrere Prozesse in Form von Programmcodes einer oder mehrerer Anwendungen und alle notwendigen Bibliotheken und Dateien für den Betrieb des Containers aufweist. Durch die Verwendung von Containern werden Problematiken wie Paketabhängigkeiten und Inkompatibilitäten umgangen. Prozesse der jeweiligen Container können durch Kernel-Namensräume voneinander getrennt sein. Sogenannte C-Groups können für die Ressourcenverwaltung sorgen, sodass jedem Container bestimmte Ressourcen zugewiesen werden können.

Dabei kann der Container nicht nur einen Prozess sondern vielmehr mehrere, und zwar beliebig viele, Prozesse aufweisen, wobei unter einem Prozess ein Vorgang verstanden werden kann, der durch ein Programm kontrolliert wird, welches zur Ausführung einen Prozessor benötigt. So kann der Prozess eine auf dem Steuermodul ablaufbare Anwendung oder ein Anwendungsprogramm sein oder er kann ein Teil einer derartigen Anwendung oder eines derartigen Anwendungsprogramms sein. Alle Prozesse des Containers können zur Nutzung des Betriebssystemkerns des Betriebssystems eingerichtet sein. Darüber hinaus können Container zur Datenverarbeitung auf dem Steuermodul installiert oder implementiert werden.

Der Container kann insbesondere für eine Virtualisierung, also für eine Nachbildung eines Hard- oder Softwareobjektes durch ein ähnliches Objekt vom selben Typ mit Hilfe einer Softwareschicht, auf Betriebssystemebene vorgesehen sein. Insbesondere kann der Prozess ein Prozess des Betriebssystems selber sein, der bei Ablaufen den Betriebssystemkern des Betriebssystems nutzt. Somit kann der Container als auf dem Steuermodul isoliert laufendes Betriebssystem ausgebildet sein. In diesem Zusammenhang kann der Container virtuelle Umgebungen darstellen bzw. erzeugen, die zwar ihre eigenen Prozesse aufweisen, jedoch für diese gemeinschaftlich den Betriebssystemkern des Betriebssystems des Steuermoduls nutzen, auf dem der Container implementiert ist. Container können neben dem einen oder mehreren Prozessen auch eine oder mehrere Anwendungen, Metadaten, Treiber, ein unabhängiges Dateiensystem, Programmbibliotheken, Schnittstellen sowie Werkzeuge wie Skripte zur Steuerung der Container aufweisen. Besonders bevorzugt handelt es sich bei dem Container um einen Linux-Container (LXC).

Das Steuermodul ist dazu eingerichtet sein, wenigstens einen Container mit wenigstens einem zur Nutzung des Betriebssystemkerns des Betriebssystems eingerichteten Datenverarbeitungsprozess zu empfangen und zu implementieren sowie vom Funktionsmodul zu verarbeitende Daten zu empfangen und diese Daten unter Verwendung des Datenverarbeitungsprozesses zu verarbeiten. Entsprechend wird bei dem Verfahren wenigstens ein Container mit wenigstens einem zur Nutzung des Betriebssystemkerns des Betriebssystems eingerichteten Datenverarbeitungsprozess an das Steuermodul übertragen und implementiert und vom Funktionsmodul zu verarbeitende Daten werden an das Steuermodul übertragen und unter Verwendung des Datenverarbeitungsprozesses verarbeitet. Hierbei kann der Container mit dem Datenverarbeitungsprozess ein vom Container mit dem Prozess zum Steuern des Funktionsmoduls verschiedener Container sein oder die beiden genannten Container sind miteinander identisch, so dass ein und derselbe Container sowohl den Datenverarbeitungsprozess als auch den Prozess zum Steuern des Funktionsmoduls aufweist. Somit ist es möglich auch solche Funktionsmodule, deren Funktion ausschließlich in der Generierung oder Bereitstellung von zu verarbeitenden Daten besteht durch Container zu repräsentieren. Bei den zu verarbeitenden Daten kann es sich zum Beispiel um Daten handeln, die für eine Schwingungsanalyse benötigt werden.

Erfindungsgemäß empfängt das Steuermodul den Container nach Einsetzen des Funktionsmoduls in das Gehäuse automatisch von einer externen Datenquelle. Dementsprechend wird bei einer Ausführungsform des erfindungsgemäßen Verfahrens der Container nach Einsetzen des Funktionsmoduls in das Gehäuse automatisch von einer externen Datenquelle an das Steuermodul übertragen. Durch das automatische Übertragen des Containers an das Steuermodul wird die Handhabbarkeit bzw. der Betrieb des Steckverbinders und des Steckverbindersystems wesentlich vereinfacht. Bei der externen Datenquelle kann es sich um eine beliebige Vorrichtung wie zum Beispiel einen einfachen Datenspeicher, eine feste oder mobile Computervorrichtung, ein Mobiltelefon, eine Datenbrille oder eine Drohne handeln. Insbesondere kann es sich bei der Computervorrichtung um ein zentrales Datenverarbeitungssystem handeln, das mit einer Mehrzahl an Steckverbindern oder Steckverbindersystemen oder anderen Vorrichtungen kabelgebunden oder drahtlos kommunizieren kann. Zum automatischen Übertragen notwendige Schritte können dabei vom Steuermodul oder dessen Prozessor oder Betriebssystem oder von einem für die Verwaltung zuständigen Container des Steuermoduls oder Funktionsmoduls durchgeführt werden.

Vorzugsweise weist das Steckverbinderbauteil oder das Steuermodul wenigstens einen Prozessor und/oder wenigstens einen Speicher und/oder wenigstens einen Switch und/oder wenigstens eine Schnittstelle für eine drahtlose oder kabelgebundene Datenübertragungsverbindung und/oder wenigstens eine IP-Adresse (Internet Protocol) auf. Der Prozessor kann insbesondere für das Ausführen des Prozesses vorgesehen sein. Ferner kann der Prozessor als sogenannter Buscontroller zur Steuerung eines Bussystems des Steckverbinderbauteils, des Steckverbinders oder Steckverbindersystems eingerichtet sein, über welches das Steuermodul mit einem oder mehreren Funktionsmodulen kommuniziert. Sofern das Steuermodul oder das Steckverbinderbauteil dazu eingerichtet ist, über ein Netzwerk wie beispielsweise das Ethernet zu kommunizieren, kann der Prozessor auch hierfür zur Steuerung vorgesehen und beispielsweise als sogenannter Ethercontroller eingerichtet sein. Vom Prozess erzeugte oder von diesem benötigte Daten können dabei auf dem Speicher gespeichert werden oder gespeichert sein. Hingegen kann der Switch für die Herstellung der Verbindung des Steuermoduls oder Steckverbinderbauteils zu einem Netzwerk wie dem Ethernet zuständig sein. Die Kommunikation kann insbesondere über die Schnittstelle erfolgen, wobei die Datenübertragungsverbindung wenigstens teilweise oder vollständig kabelgebunden sein kann oder wenigstens teilweise oder vollständig mittels einer Glasfaser hergestellt sein kann oder wenigstens teilweise oder vollständig drahtlos sein kann. Das Zuordnen einer IP-Adresse ermöglicht zudem eine einfache, IP-basierte Kommunikation mit dem Steckverbinderbauteil oder dem Steuermodul im Sinne von Industrie 4.0.

Besonders bevorzugt ist eine Ausführungsform des Steckverbinders, bei welcher eine IP-Adresse dem Container zugeordnet ist. Dabei ist es vorteilhaft, wenn allen auf dem Steuermodul vorhandenen Containern jeweilige IP-Adressen zugeordnet sind, damit alle Funktionsmodule durch die jeweiligen Container virtuell abgebildet werden und durch diese sozusagen einen digitalen Stellvertreter mit einer IP-Adresse erhalten. Stellvertretend durch die einzelnen Container sind die Funktionsmodule damit als sogenannte Industrie-4.0-Komponenten verwendbar, die mit der IT-Welt (Information Technology) und ERP-Systemen (Enterprise-Resource-Planning) kommunizieren können. Diese virtuelle Repräsentation enthält die relevanten Eigenschaften und Funktionalitäten der zugeordneten Komponente und wird gemeinhin als Verwaltungsschale bezeichnet. Eine Containerstruktur bietet die Möglichkeit, jede Komponente als Verwaltungsschale in einem eigenen Container zu kapseln. Somit bekommt jede Verwaltungsschale automatisch eine IP-Adresse, wodurch eine einfache, IP-basierte Kommunikation im Sinne von Industrie 4.0 ermöglicht wird. Konkret kann also jede angeschlossene Computervorrichtung oder Komponente eineindeutig identifiziert und über ein Netzwerk erreicht werden - unabhängig vom Alter der Computervorrichtung oder Komponente oder der verwendeten Protokolle. Auf diese Weise können existierende Systeme schnell und unkompliziert an MES-Systeme (Manufacturing Execution System), ERP-Systeme oder eine sogenannte Cloud angebunden werden. Ferner können von allen angebundenen Komponenten relevante Daten in Echtzeit zur Verfügung gestellt werden.

Vorteilhafterweise weist das Steckverbinderbauteil wenigstens einen Halterahmen auf, an dem das Steuermodul aufgenommen und/oder fixiert ist und der zum zusätzlichen Aufnehmen und/oder Fixieren des Funktionsmoduls eingerichtet ist. Ein derartiger bevorzugt im Gehäuse angeordneter Halterahmen stellt in der Praxis eine besonders bequem und einfach handzuhabende Möglichkeit dar, um einerseits verschiedene Module im Gehäuse sicher zu befestigen oder zu fixieren und andererseits dieselben jederzeit bei Bedarf wieder entfernen oder austauschen zu können.

Ferner ist es von Vorteil, wenn das Steckverbinderbauteil wenigstens einen Datenbus aufweist, der mit dem Steuermodul verbunden und mit dem Funktionsmodul verbindbar ist und der sich wenigstens teilweise oder im Wesentlichen vollständig über den Halterahmen erstreckt. Indem der Datenbus, der vom Steuermodul für das Steuern der Funktionsmodule verwendet werden kann, derart teilweise oder vollständig am Halterahmen angeordnet wird, dass er sich über diesen erstreckt, wird eine platzsparende Bauweise des Steckverbinderbauteils und des Steckverbinders realisiert, da innerhalb des Gehäuses wenig Raum benötigt wird. Eine derartige Bauweise ist daher der Miniaturisierung des Steckverbinderbauteils sowie des Steckverbinders und des Steckverbindersytems förderlich.

Des Weiteren ist bei dem Steckverbindersystem das Steuermodul dazu eingerichtet, wenigstens eine teilweise oder vollständige Kopie des Containers zu erzeugen und die Kopie an das Gegensteckverbindersteuermodul zu übertragen und auf diesem zu implementieren, sofern zum Steuern des Funktionsmoduls erforderliche freie Ressourcen des Steckverbinders unzureichend verfügbar sind oder eine vorgegebene Untergrenze unterschreiten. In einer nicht beanspruchten alternativen Ausgestaltung ist weiterhin offenbart, die vorgenannte Kopie an eine externe Computervorrichtung zu übertragen und auf dieser zu implementieren. Entsprechend wird wenigstens eine teilweise oder vollständige Kopie des Containers erzeugt und an das Gegensteckverbindersteuermodul eines mit dem Steckverbinder verbundenen Gegensteckverbinders übertragen und auf diesem implementiert oder an eine externe Computervorrichtung übertragen und auf dieser implementiert, sofern zum Steuern des Funktionsmoduls erforderliche freie Ressourcen des Steuermoduls unzureichend verfügbar sind oder eine vorgegebene Untergrenze unterschreiten. Somit wird dem auf dem Steuermodul des Steckverbinders implementierten Container, bzw. dessen Prozess oder Prozessen, die Nutzung von auf dem Gegensteckverbindersteuermodul oder dem Gegensteckverbinder vorhandenen ungenutzten oder freien Ressourcen ermöglicht. In Fällen, in denen auf dem Steuermodul oder dem Steckverbinder eine zum Ablaufen des Prozesses benötigte Ressource nicht oder nicht ausreichend zur Verfügung steht, kann der Container bedarfsweise proaktiv auf Ressourcen des Gegensteckverbindersteuermoduls oder Gegensteckverbinders zugreifen und diese für sich oder seinen Prozess nutzen. Damit ist einerseits sichergestellt, dass eine Ausführung des Prozesses selbst dann, wenn zu dessen Ausführung benötigte Ressourcen auf dem Steuermodul oder dem Steckverbinder nicht zur Verfügung stehen, nicht zwangsläufig unterbleibt bzw. nicht unvollständig oder mit großen Leistungseinbußen erfolgt. Andererseits werden redundante Ressourcen des Gegensteckverbindersteuermoduls oder Gegensteckverbinders genutzt, die ansonsten ungenutzt bleiben würden. Insgesamt wird bei dieser Ausführungsform der vorliegenden Erfindung eine flexible und effektivere Nutzung der dem Steckverbindersystem zur Verfügung stehenden Ressourcen erreicht.

Darüber hinaus wird bei dieser Ausführungsform der Programmieraufwand erheblich reduziert bzw. das Programmieren wird erheblich erleichtert. Üblicherweise werden Anwendungen in der Regel dediziert für vorgegebene Anwendungsumgebungen programmiert. Anwendungsentwickler müssen zum Zeitpunkt der Programmierung eine später zur Verfügung stehende Peripherie entweder kennen oder zwingend vorgeben. Die Kenntnis oder Vorgabe der verfügbaren Peripherien erweist sich besonders in dynamischen Umgebungen als problematisch, wenn eine spezifische Infrastruktur eines Computersystems oder einer Computervorrichtung nur schwer vorhersehbar oder sehr komplex ist. In solchen Fällen müssen Redundanzen zur Sicherung und Stabilisierung des Ablaufs des Prozesses mit berücksichtigt werden. Aus diesen Gründen erweist sich der Umstand, dass Softwareentwickler zum Zeitpunkt der Programmierung des Betriebssystems und/oder des oder der Container nicht mehr auf später zur Verfügung stehende Ressourcen achten müssen, als besonderer Vorteil dieser Ausführungsform, da Container nötigenfalls proaktiv auf freie Ressourcen zugreifen können und daher auf die oben genannten Maßnahmen verzichtet werden kann.

Nach Implementieren der Kopie des Containers auf dem Gegensteckverbindersteuermodul oder der externen Computervorrichtung kann diese auf dem Gegensteckverbindersteuermodul oder der externen Computervorrichtung parallel zum ursprünglichen Container auf dem Steuermodul bestehen. Insbesondere können Ableger dieses Containers auf dem Gegensteckverbindersteuermodul oder der externen Computervorrichtung erzeugt werden, die situationsabhängig nur jeweilige auf dem Gegensteckverbindersteuermodul oder der externen Computervorrichtung benötigte Teile oder Prozesse des ursprünglichen Containers aufweisen, ohne den ursprünglichen Container gleich vollständig kopieren zu müssen. Weil beim Erzeugen der Kopie auf nicht benötigte Teile des ursprünglichen Containers verzichtet wird, können in derart gelagerten Fällen weitere Ressourcen gespart werden. Gleichwohl ist in der Praxis oftmals eine Vervielfachung oder Verteilung des gesamten ursprünglichen Containers gewünscht oder notwendig, wobei es sich bei der Kopie um eine vollständige Kopie des ursprünglichen Containers handelt.

Bei einer bevorzugten Ausführungsform ist die auf dem Gegensteckverbindersteuermodul oder der externen Computervorrichtung implementierte Kopie des ursprünglichen Containers zur Übertragung von Daten zum ursprünglichen Container oder zum Datenaustausch mit dem ursprünglichen Container eingerichtet. Hierdurch kann der ursprüngliche Container auf Ressourcen des Gegensteckverbindersteuermoduls oder der externen Computervorrichtung zurückgreifen, ohne das Steuermodul zwangsläufig verlassen zu müssen bzw. ohne auf dem Steuermodul des Steckverbinderbauteils oder Steckverbinders deinstalliert oder gelöscht werden zu müssen. Nach erfolgter Arbeit kann stattdessen die auf dem Gegensteckverbindersteuermodul oder der externen Computervorrichtung implementierte Kopie wieder deinstalliert oder gelöscht werden. Der Datenaustausch oder eine Kommunikation zwischen dem ursprünglichen Container und seiner Kopie kann beispielsweise auf der Basis eines Internetprotokolls erfolgen. Insbesondere kann ein Container, der mit wenigstens einer oder mehreren seiner Kopien, die in einer nicht beanspruchten Ausführungsform auf unterschiedlichen Vorrichtungen implementiert sein können, beispielsweise auf dem Gegensteckverbindersteuermodul und einem oder mehreren Computervorrichtungen, von denen eine als zentrales Datenverarbeitungssystem eingerichtet sein kann, zum Austausch von Daten eingerichtet sein, so dass der Container und seine Kopien von außen gesehen wie ein einziger, sich über mehrere Vorrichtungen erstreckender Container oder Prozess wirken.

Bei einer weiteren bevorzugten Ausführungsform ist das Steckverbindersystem jedoch dazu eingerichtet, nach Implementieren der Kopie des Containers den ursprünglichen Container zu löschen. Insbesondere kann der ursprüngliche Container bei dieser Ausführungsform wenigstens ein Installationsprogramm bzw. wenigstens einen Installationsprozess zum Erzeugen und/oder Implementieren der Kopie aufweisen. Entsprechend können der ursprüngliche Container und/oder seine Kopie alternativ oder zusätzlich wenigstens ein Deinstallationsprogramm bzw. wenigstens einen Deinstallationsprozess zum Löschen des ursprünglichen Containers aufweisen. Ferner kann die Kopie ein Script aufweisen, welches beim Start der Kopie den ursprünglichen Container deinstalliert. Diese Ausführungsform realisiert Container, die proaktiv innerhalb des Steckverbindersystems vom Steckverbinder oder Steuermodul zum Gegensteckverbinder oder Gegensteckverbindersteuermodul oder, in einer nicht beanspruchten Ausführungsform, einer externen Computervorrichtung beweglich sind. Entsprechend kann auch die Kopie proaktiv innerhalb und außerhalb des Steckverbindersystems beweglich sein. Der Container bzw. seine Kopie kann beliebig zwischen verschiedenen Vorrichtungen wechseln und sich jederzeit zu derjenigen Vorrichtung mit den aktuell jeweils günstigsten Ressourcen bewegen. Ein derartiges Steckverbindersystem zeichnet sich durch eine besonders hohe Flexibilität und Effizienz in der Ressourcennutzung aus.

Im Folgenden wird die Erfindung anhand bevorzugter Ausführungsbeispiele unter Zuhilfenahme von Zeichnungen näher erläutert. Dabei zeigen:
- Fig. 1: ein Steckverbinderbauteil in einer schematischen Darstellung;
- Fig. 2: einen Steckverbinder mit dem Steckverbinderbauteil der Figur 1 und einem Funktionsmodul in einer schematischen Darstellung;
- Fig. 3: den Steckverbinder der Figur 2 mit einem weiteren Funktionsmodul;
- Fig. 4: ein Steckverbindersystem mit dem Steckverbinder der Figur 3 in einer schematischen Darstellung;
- Fig. 5: das Steckverbindersystem der Figur 4 mit migriertem Container.

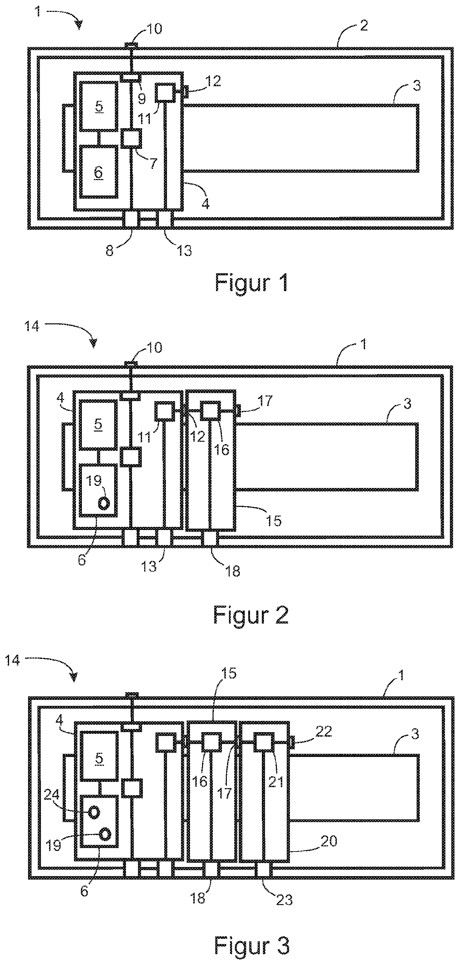

In der Figur 1 ist ein erfindungsgemäßes Steckverbinderbauteil 1 in einer stark vereinfachten, schematischen Darstellung dargestellt. Das Steckverbinderbauteil 1 weist ein Gehäuse 2 auf, in welchem ein Halterahmen 3 vorgesehen ist. Auf dem Halterahmen 3 ist ein Steuermodul 4 angeordnet und vom Halterahmen 3 fixierend gehalten. Obwohl in der Figur 1 kein weiteres Modul dargestellt ist, sind das Gehäuse 2 und der Halterahmen 3 ausreichend groß dimensioniert, damit neben dem Steuermodul 4 noch weitere Module auf dem Halterahmen 3 angeordnet werden können.

Das Steuermodul 4 weist einen Prozessor 5 und einen Speicher oder Datenspeicher oder ein Speichermittel 6 auf, wobei der Prozessor 5 Daten vom Speichermittel 6 lesen und im Speichermittel 6 speichern kann. Als Betriebssystem für den Prozessor 5 ist das bekannte unix-ähnliche Mehrbenutzer-Betriebssystem Linux vorgesehen. Ferner weist das Steuermodul 4 einen Ethernetcontroller 7 auf, der einerseits mit einer ersten Steckstelle 8 des Steckverbinderbauteiles 1 und andererseits mit einem Schalter oder Schaltelement oder Switch 9 verbunden ist, wobei sich die erste Steckstelle 8 und der Switch 9 auf einander entgegengesetzten Seiten des Steuermoduls 4 befinden. Der Switch 9 ist wiederum mit einer Schnittstelle 10 verbunden, die an einer der Steckstelle 8 entgegengesetzten Seite des Steckverbinderbauteiles 1 ausgebildet ist und mit der eine Verbindung zu einem Ethernet herstellbar ist. Schließlich weist das Steuermodul 4 einen ersten Buscontroller 11 auf, der mit einer ersten Busschnittstelle 12 des Steuermoduls 4 sowie mit einer der ersten Steckstelle 8 benachbart angeordneten zweiten Steckstelle 13 des Steckverbinderbauteiles 1 verbunden ist.

Prozessor 5, Ethernetcontroller 7 und erster Buscontroller 11 sind beim Steckverbinderbauteil 1 zwar als jeweils verschiedene Bausteine ausgeführt, allerdings können auch zwei beliebige oder alle drei dieser Bausteine oder Komponenten durch einen einzigen Baustein, bzw. durch einen einzigen Prozessor, realisiert sein.

Figur 2 zeigt einen Steckverbinder 14, der neben dem zuvor beschriebenen Steckverbinderbauteil 1 ein erstes Funktionsmodul 15 aufweist, das wie das Steuermodul 4 auf dem Halterahmen 3 angeordnet und auf diesem fixiert ist. Das erste Funktionsmodul 15 weist einen zweiten Buscontroller 16, eine zweite Busschnittstelle 17 und eine dritte Steckstelle 18 auf. Über die erste Busschnittstelle 12 des Steuermoduls 4 ist der zweite Buscontroller 16 mit dem ersten Buscontroller 11 des Steuermoduls 4 verbunden, wodurch ein sich vom ersten Steuermodul 4 zum ersten Funktionsmodul 15 erstreckender Datenbus gebildet wird. Ferner ist der zweite Buscontroller 16 mit der Busschnittstelle 17 verbunden, die mit einem Buscontroller eines weiteren in das Steckverbinderbauteil 1 optional einsetzbaren und in der Figur 2 nicht gezeigten Funktionsmoduls verbindbar ist. Die dritte Steckstelle 18 des ersten Funktionsmoduls 15 ist der zweiten Steckstelle 13 benachbart angeordnet und mit dem zweiten Buscontroller 16 verbunden. Damit das erste Funktionsmodul 15 bestimmte Funktionen ausführen kann, weist es ferner wenigstens eine in der Figur 2 aus Übersichtlichkeitsgründen nicht dargestellte Einrichtung wie einen Aktor oder Sensor auf. Beispielsweise kann das erste Funktionsmodul 15 mit einem Luftdrucksensor, einem Stromsensor, einer Photodiode oder einem Lichtwellenstecker ausgestattet sein.

Nach Einsetzen des ersten Funktionsmoduls 15 in das Steckverbinderbauteil 1, wodurch der Steckverbinder 14 entsteht, wird ein erster Softwarecontainer oder einfach Container 19 entweder vom Funktionsmodul 15 über die erste Busschnittstelle 12 oder von einer externen und in der Figur 2 nicht gezeigten Vorrichtung bzw. Computervorrichtung wie beispielsweise einem zentralen Datenverarbeitungssystem über die Schnittstelle 10 an das Steuermodul 4 übertragen. Der vom Steuermodul 4 empfangene erste Container 19 wird im Speicher 6 gespeichert und vom Prozessor 5 auf dem Steuermodul 4 implementiert. Mittels des ersten Containers 19, der Funktionen des ersten Funktionsmoduls 15 nach außen wie ein außenständiges Gerät abbildet, ist der Prozessor 5 in der Lage, das erste Funktionsmodul 15 zu steuern. Zu diesem Zweck weist der erste Container 19 entsprechende Prozesse auf, die zur Nutzung eines Betriebssystemkerns des auf dem Steuermodul 4 eingerichteten Betriebssystems Linux eingerichtet sind und die der Prozessor 5 zur Steuerung des ersten Funktionsmoduls 15 verwendet bzw. ablaufen lässt. Sofern eine Funktion des ersten Funktionsmoduls 15 darin besteht, zu verarbeitende Daten bereitzustellen oder zu generieren, kann der erste Container 19 darüber hinaus einen Datenverarbeitungsprozess aufweisen, der vom Steuermodul 4 für die Verarbeitung dieser Daten verwendet wird. Alternativ dazu kann zusätzlich zum ersten Container 19 ein weiterer Container vorgesehen sein, der einen solchen Datenverarbeitungsprozess aufweist.

Solange der Raum im Gehäuse 2 und auf dem Halterahmen 3 ausreicht kann der Steckverbinder 14 mit beliebig vielen solcher Funktionsmodule versehen werden. Hierzu zeigt die Figur 3 beispielhaft den Steckverbinder 14 mit einem weiteren, dem ersten Funktionsmodul 15 prinzipiell ähnlich aufgebauten zweiten Funktionsmodul 20. Das zweite Funktionsmodul 20 weist einen dritten Buscontroller 21, eine dritte Busschnittstelle 22 und eine vierte Steckstelle 23 auf. Über die zweite Busschnittstelle 17 des ersten Funktionsmoduls 15 ist der dritte Buscontroller 21 mit dem zweiten Buscontroller 16 des ersten Funktionsmoduls 15 verbunden, wodurch der sich vom ersten Steuermodul 4 zum ersten Funktionsmodul 15 erstreckende Datenbus zum zweiten Funktionsmodul 20 erweitert bzw. verlängert wird. Ferner ist der dritte Buscontroller 21 mit der vierten Busschnittstelle 22 verbunden, die mit einem Buscontroller eines weiteren in das Steckverbinderbauteil 1 optional einsetzbaren und in der Figur 3 nicht gezeigten Funktionsmoduls verbindbar ist. Die vierte Steckstelle 23 des zweiten Funktionsmoduls 20 ist der dritten Steckstelle 18 benachbart angeordnet und mit dem dritten Buscontroller 21 verbunden. Damit das zweite Funktionsmodul 20 bestimmte Funktionen ausführen kann, weist es ferner wenigstens eine in der Figur 3 aus Übersichtlichkeitsgründen nicht dargestellte Einrichtung wie einen Aktor oder Sensor auf. Da das zweite Funktionsmodul 20 jedoch andere Aktoren oder Sensoren aufweist als das erste Funktionsmodul 15 werden vom zweiten Funktionsmodul 20 auch andere Funktionen bereitgestellt als vom ersten Funktionsmodul 15. Auch nach Einsetzen des zweiten Funktionsmoduls 20 in das Steckverbinderbauteil 1 wird wie zuvor beschrieben ein zweiter Container 24 an den Prozessor 5 übertragen, im Speichermittel 6 gespeichert und auf dem Steuermodul 4 implementiert. Mittels des zweiten Containers 24 werden Funktionen des zweiten Funktionsmoduls 20 nach außen wie ein eigenständiges Gerät abgebildet. Unter Verwendung des zweiten Containers 24 ist der Prozessor 5 in der Lage, das zweite Funktionsmodul 20 zu steuern. Hierfür weist der zweite Container 24 entsprechende Prozesse auf, die zur Nutzung des Betriebssystemkerns des auf dem Steuermodul 4 eingerichteten Betriebssystems Linux eingerichtet sind und die der Prozessor 5 zur Steuerung des zweiten Funktionsmoduls 20 verwendet bzw. ablaufen lässt. Sofern eine Funktion des zweiten Funktionsmoduls 20 darin besteht, zu verarbeitende Daten bereitzustellen oder zu generieren, kann der zweite Container 24 darüber hinaus einen Datenverarbeitungsprozess aufweisen, der vom Steuermodul 4 für die Verarbeitung dieser Daten verwendet wird. Alternativ dazu kann zusätzlich zum zweiten Container 24 und zum ersten Container 19 ein weiterer Container vorgesehen sein, der einen solchen Datenverarbeitungsprozess aufweist.

Auf entsprechende Weise ist der Steckverbinder 14 durch beliebige Funktionsmodule erweiterbar, die zusätzlich zu dem ersten Funktionsmodul 15 und dem zweiten Funktionsmodul 20 oder anstelle eines dieser beiden Funktionsmodule 15 und 20 in den Steckverbinder 14 eingesetzt werden können und jeweilige unterschiedliche Funktionen zur Verfügung stellen. Dafür jedes neu hinzugefügte Funktionsmodul ein entsprechender Container an das Steuermodul 4 übertragen wird, der die Funktionen dieses Funktionsmoduls nach außen wie ein eigenständiges Gerät abbildet, können in den Steckverbinder 14 ohne Schwierigkeiten und ohne das auf dem Steuermodul 4 eingerichtete Betriebssystem Linux modifizieren zu müssen, selbst Funktionsmodule mit solchen Funktionen eingefügt werden, die bei der Herstellung des Steckverbinderbauteiles 1 bzw. des Steuermoduls 4 nicht berücksichtigt worden sind.

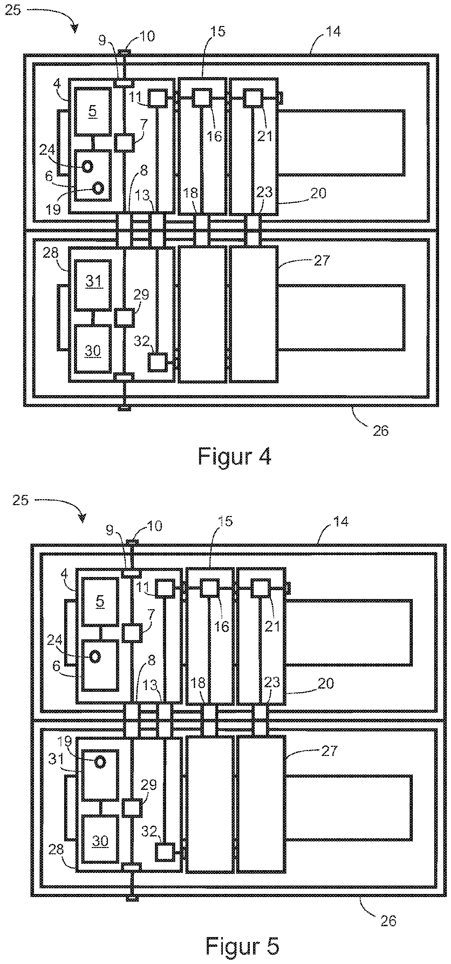

Figur 4 zeigt nun ein Steckverbindersystem 25, das den Steckverbinder 14 sowie einen mit diesem lösbar verbundenen Gegensteckverbinder 26 aufweist. Der Gegensteckverbinder 26 ist im Wesentlichen spiegelbildlich zum Steckverbinder 14 aufgebaut, wobei jedoch anstelle des ersten Funktionsmoduls 15 und des zweiten Funktionsmoduls 20 im Gegensteckverbinder 26 zwei passive Module 27 angeordnet sind, die weder über Aktoren noch über Sensoren verfügen und die über die dritte Steckstelle 18 und die vierte Steckstelle 23 mit einem jeweiligen des ersten Funktionsmoduls 15 und des zweiten Funktionsmoduls 20 lösbar verbunden sind. Ein zum Steuermodul 4 ähnlich aufgebautes Gegensteckverbindersteuermodul 28 des Gegensteckverbinders 26 ist über die erste Steckstelle 8 und die zweite Steckstelle 13 mit dem Steuermodul 4 lösbar verbunden. Insbesondere ist der Ethernetcontroller 7 über die erste Steckstelle 8 mit einem Gegensteckverbinderethernetcontroller 29 des Gegensteckverbinders 26 verbunden. Ferner weist das Gegensteckverbindersteuermodul 28 des Gegensteckverbinders 26 einen Gegensteckverbinderprozessor 30 und ein Gegensteckverbinderspeichermittel 31 sowie einen Gegensteckverbinderbuscontroller 32 auf, der mit der zweiten Steckstelle 13 und damit mit dem ersten Buscontroller 11 lösbar verbunden ist. In der Praxis ist der Gegensteckverbinder 26 häufig in einem Schaltschrank fest installiert.

Im Betrieb des Steckverbindersystems 25 werden wie bereits erwähnt das erste Funktionsmodul 15 und das zweite Funktionsmodul 20 vom Prozessor 5 gesteuert. Zum Steuern des ersten Funktionsmoduls 15 greift der Prozessor 5 auf den ersten Container 19 zurück und lässt die im ersten Container 19 enthaltenen oder darin verkapselten Prozesse ablaufen. Entsprechend greift der Prozessor 5 zum Steuern des zweiten Funktionsmoduls 20 auf den zweiten Container 24 zurück und lässt die im zweiten Container 24 enthaltenen oder darin verkapselten Prozesse ablaufen. Dies kann entweder sukzessive oder parallel geschehen. Hierbei kommuniziert der Prozessor 5 mit dem ersten Funktionsmodul 15 und dem zweiten Funktionsmodul 20 über den sich vom Steuermodul 4 über das erste Funktionsmodul 15 zum zweiten Funktionsmodul 20 erstreckenden Datenbus, der vom ersten Buscontroller 11, dem zweiten Buscontroller 16 und dem dritten Buscontroller 21 gesteuert wird. Darüber hinaus sind der Prozessor 5 und der Gegensteckverbinderprozessor 30 in der Lage, über einen durch die Verbindung des ersten Buscontrollers 11 und des Gegensteckverbinderbuscontrollers 32 gebildeten und vom ersten Buscontroller 11 und dem Gegensteckverbinderbuscontroller 32 gesteuerten Datenbus miteinander zu kommunizieren oder Daten auszutauschen. Ein Datenaustausch bzw. eine Kommunikation mit externen Vorrichtungen oder Geräten erfolgt dabei über das Ethernet, mit dem der Steckverbinder 14 über die Schnittstelle 10 verbunden ist. Gesteuert wird die Kommunikation über das Ethernet durch den Ethernetcontroller 7, der unter anderem den Switch 9 betätigt. Sofern der Gegensteckverbinder 26 bzw. das Gegensteckverbindersteuermodul 28 mit dem Ethernet kommuniziert oder Daten austauscht, wird der Ethernetcontroller 7 dabei vom Gegensteckverbinderethernetcontroller 29 unterstützt.

Es kann geschehen, dass im Betrieb des Steckverbindersystems 25 auf dem Steuermodul 4 vorhandene freie Ressourcen wie zum Beispiel die Rechenleistung des Prozessors 5 zum Steuern des ersten Funktionsmoduls 15 und des zweiten Funktionsmoduls 20 nicht ausreichend sind. In solchen Fällen besteht Dank der Repräsentation des ersten Funktionsmoduls 15 und des zweiten Funktionsmoduls 20 als erster Container 19 und zweiter Container 24 beim Steckverbindersystem 25 für das Steuermodul 4 bzw. den Steckverbinder 14 die Möglichkeit, auf freie Ressourcen des Gegensteckverbinders 26 bzw. des Gegensteckverbindersteuermoduls 28 zurückzugreifen. Hierfür wird der betreffende Container vom Steckverbinder 14 zum Gegensteckverbinder 26 verschoben oder migriert. Dies geschieht durch Erstellen einer Kopie des Containers und durch Übertragen dieser Kopie an den Gegensteckverbinder 26.

Dies ist in der Figur 5 zu sehen, in welcher der erste Container 19 vom Speichermittel 6 des Steckverbinders 14 in das Gegensteckverbinderspeichermittel 31 migriert oder verschoben worden ist, was über den vom ersten Buscontroller 11 und dem Gegensteckverbinderbuscontroller 32 gesteuerten Datenbus erfolgen kann. Nunmehr kann das erste Funktionsmodul 15 durch Ausnutzung von Ressourcen des Gegensteckverbinders 26 oder des Gegensteckverbindersteuermoduls 28 gesteuert werden, indem der Gegensteckverbinderprozessor 30 hierfür benötigte Prozesse des ersten Containers 19 ablaufen lässt und über den Datenbus zwischen dem Gegensteckverbinderbuscontroller 32 und dem ersten Buscontroller 7 mit dem Prozessor 5 kommuniziert. Hingegen erfolgt die Steuerung des zweiten Funktionsmoduls 20 unverändert durch Verwendung des zweiten Containers 24, wobei der Prozessor 5 hierfür benötigte Prozesse des zweiten Containers 24 ausführt.

Anstatt den ersten Container 19 und/oder den zweiten Container 24 zum Gegensteckverbinder 26 zu migrieren ist es in einer nicht beanspruchten Ausführungsform möglich, dieselben über die Schnittstelle 10 und das daran angeschlossene Ethernet zu einer beliebigen anderen externen Vorrichtung zu migrieren, wie zum Beispiel einem zentralen Datenverarbeitungssystem, und Prozesse des migrierten Containers von diesem ausführen zu lassen. Auf diese Weise ist es möglich, Container auf viele geeignete Vorrichtungen zu verteilen und deren Ressourcen effektiv zu nutzen.

In der Praxis kann es vorkommen, dass die Funktion entweder des ersten Funktionsmoduls 15 oder des zweiten Funktionsmoduls 20 im Wesentlichen oder sogar ausschließlich in der Erzeugung oder Bereitstellung von zu verarbeitenden Daten besteht. Obwohl in den obigen Ausführungsbeispielen sowohl der erste Container 19 als auch der zweite Container 24 als einen Prozess zur Steuerung des ersten Funktionsmoduls 15 oder des zweiten Funktionsmoduls 20 aufweisend beschrieben wurde, kann in solchen Fällen der betreffende erste Container 19 oder zweite Container 24 anstelle des Prozesses zur Steuerung des jeweiligen Containers 19 oder 24 einen Datenverarbeitungsprozess aufweisen. Je nachdem, auf welchem Steuermodul 4 oder 28 oder welcher Vorrichtung sich der Container 19 oder 24 aktuell befindet kann dieser Datenverarbeitungsprozess vom betreffenden Steuermodul 4 oder 28 oder der betreffenden Vorrichtung zur Verarbeitung der Daten eingesetzt oder verwendet werden.

Sofern der erste Container 19 und der zweite Container 24 mit jeweiligen IP-Adressen versehen sind, kann durch dieselben eine virtuelle Abbildung des ersten Funktionsmoduls 15 und des zweiten Funktionsmoduls 20 gegeben sein. Hierdurch werden das erste Funktionsmodul 15 und das zweite Funktionsmodul 20 über den ersten Container 19 und den zweiten Container 24 im Sinne von Industrie 4.0 verwendbar. Informationen über aktuelle Betriebszustände des ersten Funktionsmoduls 15 und des zweiten Funktionsmoduls 20 sind dadurch in Echtzeit abrufbar. Insbesondere stehen Daten, die vom ersten Funktionsmodul 15 und vom zweiten Funktionsmodul 20 erzeugt oder bereitgestellt werden, in Echtzeit zur Verfügung bzw. es kann auf diese in Echtzeit zugegriffen werden.

### Bezugszeichenliste

- 1: Steckverbinderbauteil
- 2: Gehäuse
- 3: Halterahmen
- 4: Steuermodul
- 5: Prozessor
- 6: Speichermittel
- 7: Ethernetcontroller
- 8: erste Steckstelle
- 9: Switch
- 10: Schnittstelle
- 11: erster Buscontroller
- 12: erste Busschnittstelle
- 13: zweite Steckstelle
- 14: Steckverbinder
- 15: erstes Funktionsmodul
- 16: zweiter Buscontroller
- 17: zweite Busschnittstelle
- 18: dritte Steckstelle
- 19: erster Container
- 20: zweites Funktionsmodul
- 21: dritte Buscontroller
- 22: dritte Busschnittstelle
- 23: vierte Steckstelle
- 24: zweiter Container
- 25: Steckverbindersystem
- 26: Gegensteckverbinder
- 27: passives Modul
- 28: Gegensteckverbindersteuermodul
- 29: Gegensteckverbinderethernetcontroller
- 30: Gegensteckverbinderprozessor
- 31: Gegensteckverbinderspeichermittel
- 32: Gegensteckverbinderbuscontroller

## Patentansprüche

1. Steckverbindersystem (25) mit wenigstens einem Steckverbinder (14) und wenigstens einem mit diesem verbindbaren Gegensteckverbinder (26), wobei der Steckverbinder (14) Folgendes besitzt:
- Ein Steckverbinderbauteil (1) mit einem Gehäuse (2),
- wenigstens ein darin angeordnetes Steuermodul (4) und
- ein Betriebssystem zum Betreiben des Steuermoduls (4), sowie
- wenigstens ein durch das Steuermodul (4) steuerbares Funktionsmodul (15, 20), welches in das Gehäuse (2) einsetzbar und darin angeordnet ist,
wobei das Steuermodul (4) dazu eingerichtet ist, wenigstens einen Container (19, 24) mit wenigstens einem zur Nutzung eines Betriebssystemkerns des Betriebssystems eingerichteten Prozess zu empfangen und zu implementieren und mittels des Prozesses das Funktionsmodul (15, 20) zumindest teilweise zu steuern, wobei das Steuermodul (4) dazu eingerichtet ist, den Container (19, 24) nach Einsetzen der Funktionsmodule (15, 20) in das Gehäuse (2) automatisch von einer externen Datenquelle (15, 20) zu empfangen, und wobei der Gegensteckverbinder (26) (20), mindestens ein Gegensteckverbindersteuermodul (28) aufweist, das nach Verbinden des Steckverbinders (14) und des Gegensteckverbinders (26) mit dem Steuermodul (4) verbunden ist, **dadurch gekennzeichnet, dass**
das Steuermodul (5) dazu eingerichtet ist, wenigstens eine teilweise oder vollständige Kopie des Containers (19, 24) zu erzeugen und die Kopie an das Gegensteckverbindersteuermodul (28) zu übertragen und auf diesem zu implementieren, sofern zum Steuern des Funktionsmoduls (15, 20) erforderliche freie Ressourcen des Steckverbinders (14) unzureichend verfügbar sind oder eine vorgegebene Untergrenze unterschreiten.

2. Steckverbindersystem (25) nach Anspruch 1, bei dem das Steuermodul (4) ferner dazu eingerichtet ist, wenigstens einen Container (19, 24) mit wenigstens einem zur Nutzung des Betriebssystemkerns des Betriebssystems eingerichteten Datenverarbeitungsprozess zu empfangen und zu implementieren sowie vom Funktionsmodul (15, 20) zu verarbeitende Daten zu empfangen und diese Daten unter Verwendung des Datenverarbeitungsprozesses zu verarbeiten.

3. Steckverbindersystem (25) nach einem der vorhergehenden Ansprüche, bei dem das Steckverbinderbauteil (1) wenigstens einen Prozessor (5) und/oder wenigstens einen Speicher (6) und/oder wenigstens einen Switch (9) und/oder wenigstens eine Schnittstelle (10, 12) für eine drahtlose oder kabelgebundene Datenübertragungsverbindung und/oder wenigstens eine IP-Adresse aufweist.

4. Steckverbindersystem (25) nach einem der vorhergehenden Ansprüche, bei dem das Steckverbinderbauteil (1) wenigstens einen Halterahmen (3) aufweist, an dem das Steuermodul (4) aufgenommen und/oder fixiert ist und der zum zusätzlichen Aufnehmen und/oder Fixieren des Funktionsmoduls (15, 20) eingerichtet ist.

5. Steckverbindersystem (25) nach Anspruch 4, bei dem das Steckverbinderbauteil wenigstens einen Datenbus aufweist, der mit dem Steuermodul (4) verbunden und mit dem Funktionsmodul (15, 20) verbindbar ist und der sich wenigstens teilweise oder im Wesentlichen vollständig über den Halterahmen (3) erstreckt.

6. Steckverbindersystem (25) nach einem der vorstehenden Ansprüche, bei dem eine IP-Adresse dem Container (19, 24) zugeordnet ist.

7. Steckverbindersystem (25) nach einem der vorstehenden Ansprüche, wobei die Container (19,24) jeweils ein Deinstallationsprogramm zum Löschen des ursprünglichen Containers (19,24) nach der besagten Übertragung und Implementierung seiner Kopie besitzen.

8. Verfahren zum Zusammensetzen eines Steckverbinders (14) und zum Betreiben des Steckverbinders (14) zusammen mit einem Gegensteckverbinder (26), wobei der Steckverbinder (14)
wenigstens ein Steckverbinderbauteil (1) mit einem Gehäuse (2) sowie wenigstens ein darin angeordnetes Steuermodul (4) und ein Betriebssystem zum Betreiben des Steuermoduls (4) aufweist, bei dem
wenigstens ein vom Steuermodul (4) steuerbares Funktionsmodul (15, 20) in das Gehäuse (2) eingesetzt wird,
wenigstens ein Container (19, 24) mit wenigstens einem Prozess, der zur Nutzung eines Betriebssystemkerns des Betriebssystems eingerichtet ist, an das Steuermodul (4) übertragen und implementiert wird, und
der Prozess zumindest zum teilweisen Steuern des Funktionsmoduls (15, 20) ausgeführt wird, wobei der Container (19, 24) nach Einsetzen der Funktionsmodule (15, 20) in das Gehäuse (2) automatisch von einer externen Datenquelle an das Steuermodul (4) übertragen wird, wobei
vom Funktionsmodul (15, 20) zu verarbeitende Daten an das Steuermodul (4) übertragen und unter Verwendung des Datenverarbeitungsprozesses verarbeitet werden, **dadurch gekennzeichnet, dass**
wenigstens eine teilweise oder vollständige Kopie des Containers (19, 24) erzeugt und an ein Gegensteckverbindersteuermodul (28) des mit dem Steckverbinder (14) verbundenen Gegensteckverbinders (26) übertragen und auf diesem implementiert wird, sofern zum Steuern des Funktionsmoduls (15, 20) erforderliche freie Ressourcen des Steuermoduls (14) unzureichend verfügbar sind oder eine vorgegebene Untergrenze unterschreiten.

## Claims

1. Plug-connector system (25) with at least one plug connector (14) and with at least one mating connector (26) capable of being connected to said plug connector, wherein the plug connector (14) has the following:
- a plug-connector component (1) with a housing (2),
- at least one control module (4) arranged therein, and
- an operating system for operating the control module (4), and
- at least one functional module (15, 20) capable of being controlled by the control module (4) and capable of being inserted into the housing (2) and arranged therein,
wherein the control module (4) has been set up to receive and to implement at least one container (19, 24) with at least one process that has been set up for utilizing a kernel of the operating system, and to control the functional module (15, 20) at least partially by means of the process, wherein the control module (4) has been set up to receive the container (19, 24) after insertion of the functional modules (15, 20) into the housing (2) automatically from an external data source (15, 20), and wherein the mating connector (26) exhibits at least one mating-connector control module (28) which after connection of the plug connector (14) and the mating connector (26) is connected to the control module (4),
**characterized in that**
the control module (5) has been set up to generate at least one partial or complete copy of the container (19, 24) and to transfer the copy to the mating-connector control module (28) and to implement it in the latter, to the extent that requisite free resources of the plug connector (14) for controlling the functional module (15, 20) are insufficiently available or fall short of a predetermined lower limit.

2. Plug-connector system (25) according to Claim 1, in which the control module (4) has furthermore been set up to receive and to implement at least one container (19, 24) with at least one data-processing process that has been set up for utilizing the kernel of the operating system, and to receive from the functional module (15, 20) data to be processed and to process said data using the data-processingprocess.

3. Plug-connector system (25) according to either of the preceding claims, in which the plug-connector component (1) exhibits at least one processor (5) and/or at least one memory (6) and/or at least one switch (9) and/or at least one interface (10, 12) for a wireless or hard-wired data-transfer link and/or at least one IP address.

4. Plug-connector system (25) according to one of the preceding claims, in which the plug-connector component (1) has at least one retaining frame (3) on which the control module (4) is accommodated and/or fixed and which has been set up for the additional accommodation and/or fixing of the functional module (15, 20).

5. Plug-connector system (25) according to Claim 4, in which the plug-connector component exhibits at least one data bus which is connected to the control module (4) and is capable of being connected to the functional module (15, 20) and which extends at least partially or substantially completely over the retaining frame (3).

6. Plug-connector system (25) according to one of the preceding claims, in which an IP address is assigned to the container (19, 24).

7. Plug-connector system (25) according to one of the preceding claims, wherein the containers (19, 24) each exhibit an uninstallation program for deleting the original container (19, 24) after said transmission and implementation of its copy.

8. Method for assembling a plug connector (14) and for operating the plug connector (14) together with a mating connector (26), wherein the plug connector (14) exhibits at least one plug-connector component (1) with a housing (2) and also at least one control module (4) arranged therein and an operating system for operating the control module (4), in which at least one functional module (15, 20) capable of being controlled by the control module (4) is inserted into the housing (2), at least one container (19, 24) with at least one process, which has been set up for utilizing a kernel of the operating system, is transferred to the control module (4) and implemented, and the process is executed at least for the purpose of partially controlling the functional module (15, 20), wherein after insertion of the functional modules (15, 20) into the housing (2) the container (19, 24) is automatically transferred to the control module (4) from an external data source, wherein data to be processed is transferred to the control module (4) from the functional module (15, 20) and processed using the data-processing process, **characterized in that**
at least one partial or complete copy of the container (19, 24) is generated and transferred to a mating-connector control module (28) of the mating connector (26) -connected to the plug connector (14) and is implemented in the latter to the extent that requisite free resources of the control module (14) for controlling the functional module (15, 20) are insufficiently available or fall short of a predetermined lower limit.

## Revendications

1. Système de connecteur enfichable (25), comprenant au moins un connecteur enfichable (14) et au moins un connecteur enfichable complémentaire (26) pouvant être relié à celui-ci, le connecteur enfichable possédant :
- un composant de connecteur enfichable (1) doté d'un boîtier (2),
- au moins un module de commande (4) disposé dans celui-ci, et
- un système d'exploitation pour faire fonctionner le module de commande (4), ainsi que
- au moins un module de fonction (15, 20) pouvant être commandé par le module de commande (4) et qui peut être inséré et est disposé dans le boîtier (2),
le module de commande (4) étant aménagé pour recevoir et mettre en oeuvre au moins un conteneur (19, 24) doté d'au moins un processus aménagé pour l'utilisation d'un noyau de système, d'exploitation du système d'exploitation, et pour commander au moins partiellement le module de fonction (15, 20) au moyen du processus, le module de commande (4) étant aménagé, après insertion des modules de fonction (15, 20) dans le boîtier (2), pour recevoir automatiquement le conteneur (19, 24) à partir d'une source de données externe (15, 20), et dans lequel
le connecteur enfichable complémentaire (26) présente au moins un module de commande de connecteur enfichable complémentaire (28) qui est relié au module de commande (4) après la liaison du connecteur enfichable (14) et du connecteur enfichable complémentaire (26),
**caractérisé en ce que** le module de commande (5) est aménagé pour créer au moins une copie partielle ou complète du' conteneur (19, 24) et pour transmettre la copie au module de commande de connecteur complémentaire (28) et pour la mettre en œuvre sur celui-ci dans la mesure où des ressources libres du connecteur enfichable (14), nécessaires à la commande du module de fonction (15, 20), sont disponibles en nombre insuffisant ou soupassent une limite inférieure prédéfinie.

2. Système de connecteur enfichable (25) selon la revendication 1, dans lequel le module de commande (4) est en outre aménagé pour recevoir et mettre en œuvre au moins un conteneur (19, 24) doté d'au moins un processus de traitement de données aménagé pour l'utilisation du noyau de système d'exploitation du système d'exploitation, ainsi que pour recevoir des données à traiter par le module de fonction (15, 20) et pour traiter ces données en utilisant le processus de traitement de données.

3. Système de connecteur enfichable (25) selon l'une quelconque des revendications précédentes, dans lequel le composant de connecteur enfichable (1) présente au moins un processeur (5) et/ou au moins une mémoire (6) et/ou au moins un commutateur (9) et/ou au moins une interface (10, 12) pour une liaison de transmission de données avec ou sans fil et/ou au moins une adresse IP.

4. Système de connecteur enfichable (25) selon l'une quelconque des revendications précédentes, dans lequel le composant de connecteur enfichable (1) présente au moins un cadre de retenue (3) sur lequel le module de commande (4) est reçu et/ou fixé et qui est aménagé pour recevoir et/ou fixer en plus le module de fonction (15, 20).

5. Système de connecteur enfichable (25) selon la revendication 4, dans lequel le composant de connecteur enfichable présente au moins un bus de données qui est relié au module de commande (4) et peut être relié au module de fonction (15, 20) et qui s'étend au moins en partie ou de manière substantiellement complète sur le cadre de retenue (3).

6. Système de connecteur enfichable (25) selon l'une quelconque des revendications précédentes, dans lequel une adresse IP est associée au conteneur (19, 24).

7. Système de connecteur enfichable (25) selon l'une quelconque des revendications précédentes, dans lequel le conteneur (19, 24) possède respectivement un programme de désinstallation pour supprimer le conteneur d'origine (19, 24) après ladite transmission et mise en œuvre de sa copie.

8. Procédé pour assembler un connecteur enfichable (14) et pour faire fonctionner le connecteur enfichable (14) conjointement avec un connecteur enfichable complémentaire (26), le connecteur enfichable (14) présentant .au moins un composant de connecteur enfichable (1) doté d'un boîtier (2), ainsi qu'au moins un module de commande (4) disposé dans celui-ci, et un système d'exploitation pour faire fonctionner le module de commande (4), dans lequel
au moins un module de fonction (15, 20) pouvant être commandé par le module de commande (4) est inséré dans le boîtier (2),
au moins un conteneur (19, 24), doté d'au moins un processus qui est aménagé pour l'utilisation d'un noyau de système d'exploitation du système d'exploitation, est transmis au et mis en œuvre sur le module de commande (4), et
le processus est exécuté au moins pour la commande partielle du module de fonction (15, 20), le conteneur (19, 24), après insertion des modules de fonction (15, 20) dans le boîtier (2), étant transmis automatiquement d'une source de données externe au module de commande (4), dans lequel
des données à traiter par le module de fonction (15, 20) sont transmises au module de commande (4) et sont traitées en utilisant le processus de traitement de données,
**caractérisé en ce qu'**au moins une copie partielle ou complète du conteneur (19, 24) est générée et transmise à un module de commande de connecteur enfichable complémentaire (28) du connecteur enfichable complémentaire (26) relié au connecteur enfichable (14) et est mise en œuvre sur celui-ci dans la mesure où des ressources libres du module de commande (14), nécessaires à la commande du module de fonction (15, 20), sont disponibles en nombre insuffisant ou soupassent une limite inférieure prédéfinie.
